# EUROPÄISCHE PATENTSCHRIFT

(11) **EP 2 945 032 B1**
(45) Veröffentlichungstag und Bekanntmachung des Hinweises auf die Patenterteilung: **26.02.2020**
(21) Anmeldenummer: 15001070.0
(22) Anmeldetag: 15.04.2015
(51) Int. Cl.: G05B 19/042, G05D 23/00, G05B 13/04

(54) **VERFAHREN ZUR ERMITTLUNG DER SCHALTZEITEN UND/ODER DER HEIZKURVENKENNLINIE EINER HEIZUNGSANLAGE**
METHOD FOR DETERMINING THE SWITCHING TIMES AND/OR THE HEATING CHARACTERISTIC CURVE OF A HEATING SYSTEM
PROCÉDÉ DE DÉTERMINATION DE TEMPS DE COMMUTATION ET/OU DE LA LIGNE DE COURBE CARACTÉRISTIQUE DE CHAUFFAGE D'UNE INSTALLATION DE CHAUFFAGE

(30) Priorität: 13.05.2014 DE 102014006827
(43) Veröffentlichungstag der Anmeldung: 18.11.2015
(73) Patentinhaber: ista International GmbH, 45131 Essen (DE)
(72) Erfinder: Linden, Jens, Dr., 45131 Essen (DE); Böwer, Bernd, 41539 Dormagen (DE)
(74) Vertreter: Cohausz Hannig Borkowski Wißgott

(56) Entgegenhaltungen:
- EP-A1- 2 214 071
- US-A1- 2011 160 913
- US-A1- 2013 103 621
- US-B1- 6 439 469

## Beschreibung

Die Erfindung betrifft ein Verfahren zur Ermittlung der Schaltzeiten einer Nachtabsenkung und/oder der Nachtabschaltung und/oder der Heizkurven-Kennlinie einer Heizungsanlage.

Im Stand der Technik ist es bekannt, dass die Vorlauftemperatur von Heizungsanlagen üblicherweise außentemperaturgesteuert ist. Dies bedeutet im Regelfall, dass die Vorlauftemperatur umso größer ist, je kleiner die Außentemperatur ist. Dadurch wird kompensiert, dass die Wärmeverluste eines Gebäudes bei geringeren Außentemperaturen größer sind. Diese Abhängigkeit zwischen der Vorlauftemperatur und der Außentemperatur wird weiterhin üblicherweise mittels einer Kennlinie festgelegt, die in der Heizungsanlage, z.B. in deren Regler hinterlegt ist. Diese Kennlinie wird auch als Heizkurve bezeichnet.

Unterschieden werden dabei weiterhin oftmals wenigstens zwei, ggfs. drei Betriebsmodi, nämlich ein Normalbetrieb und ein Absenkbetrieb, üblicherweise während der Nacht und/oder ein Abschaltbetrieb, ebenso üblicherweise während der Nacht. Im Absenkbetrieb wird die Vorlauftemperatur gegenüber dem Normalbetrieb reduziert, die grundsätzliche Abhängigkeit von der Heizkurve bzw. der Kennlinie bleibt jedoch erhalten. Im Regelfall wird bei einem Absenkbetrieb gegenüber dem Normalbetrieb lediglich das Niveau der Heizkurve bzw. der Kennlinie geändert, insbesondere verringert werden, z.B. durch parallele Verschiebung. Ebenso kann die Steigung im Absenkbetrieb verändert werden, insbesondere durch einen geringeren Wert.

Im Abschaltbetrieb hingegen wird der Heizkessel komplett abgeschaltet, die Kennlinie hat somit quasi die Steigung NULL. Zwischen diesen wenigstens zwei, ggfs. drei Betriebsmodi wird normalerweise zu bestimmten Zeiten, den Schaltzeiten, umgeschaltet, was durch Programmierung in der Heizanlage automatisch erfolgt.

Heutzutage wird es immer mehr nachgefragt, Heizungsanlagen energetisch zu prüfen und in Abhängigkeit eines Prüfergebnisses zu optimieren ggfs. sogar gegen komplett neue Heizungsanlagen auszutauschen.

Im Rahmen einer solchen Prüfung ist es notwendig, eine Information darüber vorliegen zu haben, wie der Heizbetrieb einer Heizanlage konkret funktioniert, insbesondere zu welchen Schaltzeiten die Umschaltung zwischen den möglichen Betriebsmodi erfolgt und um welche der genannten Betriebsmodi es sich handelt. Des Weiteren ist eine Information über die konkreten Kennlinien der Heizungsanlage in den verschiedenen Betriebsmodi wünschenswert.

Wenngleich einige der moderneren Heizanlagen Schnittstellen bereitstellen, um Daten aus der Heizungsanlage auszulesen sind solche Schnittstellen oftmals herstellerspezifisch ausgelegt, so dass Drittanbieter keinen Zugriff haben auf die in der Heizungsanlage hinterlegten Daten der Schaltzeiten und der Betriebsmodi. Eine Standardisierung solcher Schnittstellen ist derzeit nicht in Sicht. Ein solches Verfahren ist aus dem Dokument EP 2 214 071 bekannt.

Ältere Anlage bieten oft nicht einmal solche Schnittstellen und zumindest die Kennliniensteilheit kann bei solchen Anlagen nicht oder allenfalls nur qualitativ abgelesen werden.

Es ist somit die Aufgabe der Erfindung ein Verfahren bereitzustellen, mittels dem unabhängig von der an einer Heizungsanlage verbauten Hardware die Möglichkeit besteht, die Heizungsanlage hinsichtlich der Schaltzeiten zwischen den Betriebsmodi zu analysieren, ggfs. auch hinsichtlich der Betriebsmodi selbst zu analysieren, also insbesondere die Kennlinien der Betriebsmodi zu ermitteln.

Weiterhin ist es eine Aufgabe der Erfindung diese Analyse ohne einen Eingriff in die Heizungsanlage vornehmen zu können, so dass die Durchführung der Analyse selbst das Betriebsverhalten oder auch eine Herstellergarantie der Heizungsanlage nicht beeinflusst.

Die Aufgabe der Erfindung wird dadurch gelöst, dass für mehrere Zeitpunkte eines jeden von mehreren Messtagen Wertepaare gebildet werden von zu dem Zeitpunkt vorliegender Vorlauftemperatur wenigstens eines Heizkreises der Heizungsanlage und Außentemperatur am Ort der Liegenschaft der Heizungsanlage und das zeitliche Intervall eines Tages von 24 Stunden in mehrere, aufeinander folgende, Zeitboxen unterteilt wird, und jedes Wertepaar derjenigen Zeitbox zugeordnet wird, in welcher der Zeitpunkt des Wertepaares liegt und für jede der Zeitboxen zu den darin zugeordneten Messwertpaaren ein mathematisches Modell gebildet wird, welches die Abhängigkeit von Vorlauftemperatur zur Außentemperatur in dieser Zeitbox beschreibt.

Der Kerngedanke der Erfindung beruht darauf, dass durch reine Beobachtung der Heizungsanlage hinsichtlich deren Verhalten, die Vorlauftemperatur in Abhängigkeit der Außentemperatur einzustellen, eine Information über die Schaltzeiten zwischen den Betriebsmodi und ggfs. auch über die Heizkurven bzw. Kennlinien dieser Betriebsmodi gewonnen werden kann.

Dazu bedient sich die Erfindung der Maßnahme Messwertpaare zu bilden von zeitlich korrelierender Vorlauftemperatur und Außentemperatur, d.h. es werden für mehrere Zeitenpunkte eines jeweiligen Tages jeweils solche Messwertpaare gebildet. Dies erfolgt für alle Tage des Messzeitraumes, z.B. also über alle Tage eines Monats, bzw. über 30 Tage hinweg, ggfs. auch länger.

Die Messwertpaare, die zu denjenigen Zeitpunkten gehören, die in dem zeitlichen Intervall einer der gebildeten Zeitbox liegen, werden genau dieser betreffenden Zeitbox zugeordnet. Z.B. können über die 24 Stunden eines Tages insgesamt 24 Zeitboxen von jeweils einer Stunde Dauer gebildet werden. Ein Zeitpunkt kann hier z.B. eine Uhrzeit darstellen, wobei eine Zeitbox jeweils einem Uhrzeitintervall entsprechen kann.

Beispielsweise werden sodann alle Messwertpaare, die zu Zeiten zwischen 00.00 und 1.00 Uhr erfasst worden sind, der ersten Zeitbox zugeordnet, die dieses Uhrzeitintervall von 00.00 bis 1.00 Uhr umfasst. Alle Messwertpaare die zu Zeiten zwischen 1.00 und 2:00 Uhr erfasst wurden, werden der zweiten Zeitbox dieses Intervalles zugeordnet und so fort. Natürlich können die Intervallbreiten der Zeitboxen grundsätzlich beliebig gewählt werden. Die hier genannte Intervallbreite von einer Stunde stellt lediglich ein nicht bindendes Beispiel dar.

Im Rahmen der Erfindung besteht keine zwingende Notwendigkeit die Messwerte von Vorlauftemperatur und Außentemperatur jeweils gleichzeitig zu erfassen, wenngleich dies möglich ist und sodann das jeweilige Messwertepaar denselben Zeitpunkt zugeordnet bekommt wie dieselben Zeitpunkte der einzelnen Messwerte. Vielmehr können die Werte von Vorlauftemperatur und Außentemperatur auch jeweils eigene und somit unterschiedliche Zeitpunkte der Erfassung bzw. Messung oder sonstigen Zugänglichmachung aufweisen.

Für ein zu bildendes Messwertpaar kann dann ein gemeinsamer Zeitpunkt gebildet werden, z.B. in Abhängigkeit eines oder beider einzelnen Zeitpunkte der beiden in das Messwertpaar einfließenden Messwerte. Der Zeitpunkt für ein Messwertpaar kann z.B. durch eine mathematische Berechnungsvorschrift aus den Zeitpunkten beider Werte für Vorlauftemperatur und Außentemperatur gebildet werden.

Es kann allgemein vorgesehen sein, dass diejenigen Werte von Vorlauftemperatur und Außentemperatur zu einem Wertepaar zusammengefasst werden, deren jeweilige Zeitpunkte gleich sind oder sich nur bis auf einen festgelegten Toleranzwert unterscheiden. So wird sichergestellt, dass, insbesondere bei nicht gleichzeitiger Erfassung bzw. Ermittlung beider Temperaturwerte diese beiden in ein Messwertepaar einfließenden Werte zeitlich zumindest hinreichend nahe beieinander liegen.

Die Erfindung kann auch vorsehen, dass die Werte von Vorlauftemperatur und Außentemperatur nicht nur zu verschiedenen Zeitpunkten, sondern auch jeweils wiederholend, insbesondere periodisch wiederholend mit verschiedenen zeitlichen Abständen erfasst werden bzw. zugänglich gemacht werden.

So können also die Messwerte für die Vorlauftemperatur an jedem der Messtage im sich wiederholenden Abstand einer ersten Zeitdauer und die Messwerte der Außentemperatur an jedem der Messtage im sich wiederholenden Abstand einer zweiten Zeitdauer erfasst bzw. zugänglich gemacht oder ermittelt werden. Die erste und zweite Zeitdauer können gleich sein, insbesondere können die Messungen / Erfassungen dann auch gleichzeitig sein, müssen dies jedoch nicht.

Eine bevorzugte Ausführung kann vorsehen, dass die erste und zweite Zeitdauer kleiner gewählt wird als die zeitliche Dauer der Zeitboxen. Dadurch wird sichergestellt, dass pro Messtag wenigstens ein Messwertpaar aus Vorlauftemperatur und Außentemperatur einer jeweiligen Zeitbox zugeordnet wird. Um eine ausreichend genaue Modellbildung zu ermöglichen kann es z.B. vorgesehen sein, dass die erste und zweite Zeitdauer jeweils wenigstens 5-mal, bevorzugt wenigstens 10-mal kleiner sind als die zeitliche Intervallbreite einer jeden Zeitbox. So werden pro Messtag demnach jeweils wenigstens 5, bevorzugt wenigstens 10 Wertepaare einer jeweiligen Zeitbox zugeordnet.

Jedes Messwertpaar kann einen Zeitpunkt aufweisen in dessen Abhängigkeit gemäß obiger Darlegung die Zuordnung zur Zeitbox erfolgen kann, insbesondere in der Bedeutung einer Uhrzeit. Dieser Zeitpunkt des Messwertpaares kann einem der Zeitpunkte wenigstens eines der beiden Messwerte entsprechen, ggfs. auch komplett aus den Zeitpunkten eines oder beiden Zeitpunkte der Messwerte neu gebildet sein.

Unter einem Zeitpunkt wird bevorzugt diejenige Uhrzeit verstanden, zu der das Messwertpaar oder jeder der Messwerte Gültigkeit hat bzw. erfasst, ermittelt oder zugänglich wurde. Der Zeitpunkt kann also z.B. eine konkrete Uhrzeit des Tages darstellen, die zusammen mit einem jeweiligen Messwert bzw. einem gebildeten Messwertpaar gespeichert wird, bzw. zumindest bei der Zuordnung der Messwerte zu einem Paar oder der Zuordnung des Messwertpaares zur Zeitbox bekannt ist.

Beispielsweise kann es vorgesehen sein, dass bei unterschiedlichen ersten und zweiten Zeitdauern der Erfassung oder Ermittlung von Vorlauftemperatur und Außentemperatur mehrere Messwerte mit Zeitpunkten der kürzeren Zeitdauer auf jeweils einen Messwerte mit einem Zeitpunkt korrespondierend zu der längeren Zeitdauer umgerechnet werden, insbesondere durch Mittelung.

Z.B. kann es vorgesehen sein, die Vorlauftemperatur alle 5 Minuten zu messen und zu erfassen und die Außentemperatur jedoch nur jede Stunde einmal. In diesem Fall können insgesamt 12 Vorlauftemperaturmesswerte zu einem neuen Vorlauftemperaturmesswert gemittelt werden, der sodann zu den länger beabstandeten Zeitpunkten mit einer Stunde Abstand korreliert. Somit ist ein Vorlauftemperaturmesswert für Zeitpunkte von einer Stunde Abstand errechnet worden aus 12 einzelnen Vorlauftemperaturmesswerten für Zeitpunkte von 5 Minuten Abstand. Für Zeitpunkte von 1 Stunde zeitlichem Abstand kann somit ein Messwertpaar aus Vorlauftemperatur und Außentemperatur mit einem Zeitpunkt auf 1-h-Basis gebildet werden und dieses Paar genau einer Zeitbox zugeordnet werden, obwohl die einzelnen Messwerte, die in die Bildung des Paares eingehen, mit unterschiedlichen zeitlichen Abständen erfasst wurden.

In diesem Beispiel erhält somit jede Zeitbox pro Tag genau ein zugeordnetes Messwertpaar, so dass nach z.B. 30 Tagen gesamter Messzeitdauer jede Zeitbox genau 30 zugeordnete Messwertpaare umfasst, anhand der jeweils die Modellbildung erfolgt. Bei entsprechend anders gewählter Dauer von erster und zweiter Zeitdauer können auch entsprechend mehr Messwertpaare pro Tag einer jeweiligen Zeitbox zugeordnet werden.

Bevorzugt wird es vorgesehen sein, die Vorlauftemperatur im wiederholenden Abstand einer kürzeren ersten Zeitdauer zu erfassen als dies bei der Außentemperatur der Fall ist, die sodann wiederholend im Abstand einer vergleichsweise längeren zweiten Zeitdauer erfasst wird. Damit wird dem Umstand Rechnung getragen, dass die Außentemperatur üblicherweise keine kurzzeitigen Schwankungen hat, hingegen die Vorlauftemperatur bei z.B. getaktetem Betrieb einer Heizungsanlage solche Schwankungen haben kann und solche Schwankungen eliminiert werden können z.B. durch Umrechnung mehrerer Messwerte der Vorlauftemperatur mit kürzeren zeitlichen Abstand auf einen z.B. gemittelten Vorlauftemperaturmesswert mit einem umgerechneten zeitlichen Abstand der dem Abstand der zweiten Zeitdauer entspricht, mit welcher die Außentemperatur erfasst wird.

Allgemein können somit die Messwerte, die mit geringerem zeitlichen Abstand erfasst wurden, umgerechnet werden in einen Messwert der als mit einem größeren zeitlichen Abstand erfasst anzusehen ist.

Es besteht auch umgekehrt grundsätzlich die Möglichkeit, dass bei unterschiedlichen ersten und zweiten Zeitdauern zwischen den jeweiligen Erfassungen/ Ermittlungen von der Vorlauftemperatur und der Außentemperatur mehrere Werte von denjenigen Werten, die mit der längeren zeitlichen Dauer erfasst werden umgerechnet werden auf mehrere Werte mit jeweils neuem Zeitpunkt und die Abstände der Zeitpunkte der umgerechneten Werte denjenigen Abständen entspricht, mit denen die Werte mit der kürzeren Zeitdauer erfasst werden. Dies kann z.B. durch eine Interpolation erfolgen, gemäß welcher Zwischenwerte zwischen zwei konkret mit größerem Abstand gemessenen Werten errechnet werden, z.B. indem man annimmt, dass sich die Werte linear zwischen den konkret gemessenen / erfassten Werten ändern. Den interpolierten Werten werden sodann jeweils auch errechnete Zeitpunkte zwischen den konkreten Zeitpunkten der Erfassung / Ermittlung zugeordnet.

Da nun erfindungsgemäß für jede Zeitbox auf der Basis der darin zugeordneten Messwertpaare ein mathematisches Modell gebildet wird, welches die Abhängigkeit der Vorlauftemperatur von der Außentemperatur in der jeweils betrachteten Zeitbox beschreibt, so besteht die Möglichkeit mit einer zeitlichen Auflösung der Zeitbox-Intervallbreite Schaltzeiten zwischen verschiedenen Betriebsmodi festzustellen.

Unterscheiden sich nämlich - abgesehen von Messungenauigkeiten - die in zwei aufeinander folgenden Zeitboxen ermittelten Modelle, so ist es ersichtlich so, dass in den Zeitboxen verschiedene Betriebsmodi vorherrschten und demnach in oder zwischen den aufeinander folgenden Zeitboxen eine Umschaltung der Betriebsmodi erfolgte.

Die Erfindung kann hier vorsehen, dass für jede Zeitbox ein Modell, insbesondere lineares Modell parametriert wird und in Abhängigkeit wenigstens eines Parameters des Modells, insbesondere eines die Steigung des Modells beschreibenden Parameters auf das Vorliegen einer Schaltzeit in oder vor einer Zeitbox geschlossen wird. Die Modellbildung kann allgemein vorsehen, dass diese immer nach derselben mathematischen Vorschrift, z.B. einer linearen Regression erfolgt und zur Anpassung des Modells an die Messwerte wenigstens ein Parameter des Modells, im Regelfall mehrere Parameter angepasst werden, so dass das gebildete Modell die tatsächliche Abhängigkeit möglichst genau (im Rahmen mathematischer Fehlergrenzen) beschreibt. Verschiedene gebildete Modelle unterscheiden sich z.B. also nur durch ihre jeweilige Parametrierung.

Liegt in einer Zeitbox somit ein abgesenkter Betrieb vor, so wird beispielsweise die Steigung des für diese Zeitbox ermittelten Modells kleiner sein als in einer Zeitbox mit Normalbetrieb der Heizungsanlage. In der Zeitbox mit abgeschaltetem Betrieb wird hingegen eine Steigung von Null oder nahe Null ermittelt werden. Es besteht hier demnach die Möglichkeit bereits auf der Grundlage eines einzigen Parameters eines gebildeten Modells auf das Vorliegen einer Schaltzeit in oder zwischen zwei Zeitboxen zu schließen.

Eine Ausführung der Erfindung kann auch vorsehen, dass wenigstens ein Parameter des Modells in Abhängigkeit von der Zeitbox, insbesondere deren Ordnungsnummer grafisch visualisiert wird. Dies kann erfolgen durch eine Datenverarbeitungsanlage, auf welcher die vorbeschriebene Abarbeitung des Verfahrens programmtechnisch erfolgt, z.B. auf einer zentralen Auswerteeinheit eines Dienstleisters, die extern von der Liegenschaft der Heizungsanlage angeordnet ist. Auf diese zentrale Auswerteeinheit können die Messwerte von Vorlauftemperatur und/oder Außentemperatur übertragen werden, in einer möglichen Ausführung z.B. durch Telekommunikation über wenigstens ein Netzwerk. Vorlauftemperatur und Außentemperatur können z.B. über verschiedene Telekommunikationsnetze an die zentrale Auswerteeinheit übertragen werden, insbesondere wenn beide Temperaturwerte nicht gleichzeitig am Ort der Liegenschaft der Heizungsanlage Messtechnisch durch Temperaturfühler erfasst werden.

Die Erfindung kann vorsehen, dass die Erfassung der Vorlauftemperatur mittels eines Temperatursensors an wenigstens einem Heizkreis der Heizungsanlage erfolgt und die Vorlauftemperaturmesswerte mittels eines Datenloggers, insbesondere am Ort der Heizungsanlage in Verbindung mit einem jeweiligen Zeitpunkt (z.B. Uhrzeit oder fortlaufender Zähler) der Messung gespeichert werden.

Es kann so jeder einzelne TemperaturMesswert zusammen mit seinem Zeitpunkt per Telekommunikation an die Auswerteeinheit übertragen werden oder auch Gruppen von Messwerten und Zeitpunkten oder auch nach Beendigung eines Messzeitraumes von z.B. mehreren Tagen alle Messwerte und ihre jeweiligen Zeitpunkte auf einmal. Hier können die mehreren Messwerte und Zeitpunkte für die Vorlauftemperatur z.B. über ein Telekommunikationsnetzwerk, z.B. GSM, UMTS, LTE etc. an die zentrale Auswerteeinheit übertragen werden.

Alternativ kann auch der genannte Datenlogger aus der Liegenschaft manuell entfernt werden und die Daten aus diesem durch Direktanschluß der Auswerteeinheit an seine Schnittstelle oder durch Datenfernübertragung mittels Telekommunikation in die Auswerteeinheit übertragen werden.

Mit der zentralen Auswerteeinheit können aus den - wie auch immer erhaltenen - Messwerten und Zeitpunkten der Vorlauftemperatur in Verbindung mit den ebenfalls an die Auswerteeinheit übermittelten Außentemperaturen und deren Zeitpunkten die Zuordnung zu Messwertpaaren erfolgen, ggfs. unter Anpassung der Zeitbasen bzw. Zeitpunkte der Erfassung der beiden Messwertarten durch Umrechnung einer der beiden Messwertarten auf die Zeitbasis, bzw. den Abstand der Zeitpunkte der anderen Messwertart.

Die Erfassung der Außentemperaturen kann z.B. erfolgen mittels eines Temperatursensors am Ort der Liegenschaft der Heizungsanlage, wobei die Außentemperaturwerte mittels eines Datenloggers, insbesondere am Ort der Heizungsanlage in Verbindung mit einem jeweiligen Zeitpunkt gespeichert werden, im Wesentlichen also so, wie es auch zu den Vorlauftemperaturen beschrieben wurde. Ggfs. kann derselbe Datenlogger verwendet werden, insbesondere bei gleichzeitiger Erfassung. Bei gleichzeitiger Erfassung mit demselben Datenlogger kann dieser sofortig die Messwertpaare mit einem jeweils zugeordneten Zeitpunkt bilden.

Die Außentemperaturen müssen aber nicht zwingend direkt am Ort der Heizungsanlage erfasst werden durch eine dafür extra vorgesehene Sensorik.

Die Erfindung kann auch vorsehen, dass die Außentemperaturen ermittelt werden mittels eines Temperatursensors einer Wetterstation, insbesondere einer über ein Telekommunikationsnetzwerk öffentlich zugänglichen Wetterstation am Ort oder in der Nähe des Ortes der Liegenschaft der Heizungsanlage und die Außentemperaturwerte in Verbindung mit einem Zeitpunkt gespeichert werden, insbesondere in einer zentralen Auswerteeinheit. Z.B. kann die Auswerteeinheit diese Wetterstation über ein Telekommunikationsnetzwerk abfragen, um zu jedem Abfragezeitpunkt, die Außentemperatur zu ermitteln und mit dem Zeitpunkt zu speichern. Besonders bei dieser Ausführung können die beiden Temperaturwerte durch unterschiedliche Netzwerke an die Auswerteeinheit übertragen werden.

Eine andere Ausführung kann auch vorsehen, dass die Außentemperatur berechnet wird mittels eines Wettermodels in Abhängigkeit des Ortes der Liegenschaft der Heizungsanlage und die Außentemperaturwerte in Verbindung mit einem Zeitpunkt gespeichert werden, insbesondere in einer zentralen Auswerteeinheit. Hier kann die Berechnung direkt in der Auswerteeinheit oder auch dezentral in einem externen Server berechnet werden.

Wiederum eine andere Ausführung kann vorsehen, dass Außentemperatur-Messwerte für den Ort der Liegenschaft der Heizungsanlage in Verbindung mit einer Zeitangabe als Zeitpunkt aus einer meteorologischen Datenbank, insbesondere mittels eines Telekommunikationsnetzwerkes ausgelesen werden. Beispielsweise kann eine solche Datenbank von einem Drittanbieter öffentlich zur Abfrage zur Verfügung gestellt werden.

Erfindungsgemäß spielt es keine Rolle, auf welche Art und Weise die zentrale Auswerteeinheit eine Information über die Außentemperatur am Ort der Heizungsanlage erhält.

Neben der Bestimmung von Schaltzeiten der analysierten Heizungsanlage kann die Erfindung auch direkt die Kennlinien bzw. Heizkurven der Heizungsanlage für die verschiedenen Betriebsmodi ermitteln. Dies ist im Wesentlichen für jede Zeitbox erfolgt durch die vorgenommene Modellbildung. Es kann hier vorgesehen sein, dass jedes gebildete Modell durch Vergleich der Modell untereinander bzw. von deren Parameter kategorisiert wird, z.B. in ein Modell für den Normalbetrieb, ein Modell für den Absenkbetrieb und/oder ein Modell für den Abschaltbetrieb.

Alle gleich kategorisierten Modelle können herangezogen werden, um aus diesen, bzw. deren jeweiligen Parametern ein Gesamtmodell für die betrachtete Betriebskategorie zu bilden. Z.B. können die Werte der Steigungsparameter bei einer lineare Modellbildung für alle Modelle gleicher Kategorie gemittelt werden. Auf diese Weise kann für jeden Betriebsmodus ein einziges Modell ermittelt werden, dass die Heizkurve bzw. die Kennlinie der Heizungsanlage beschreibt.

Eine Ausführungsform der Erfindung wird nachfolgend an einem Beispiel erläutert.

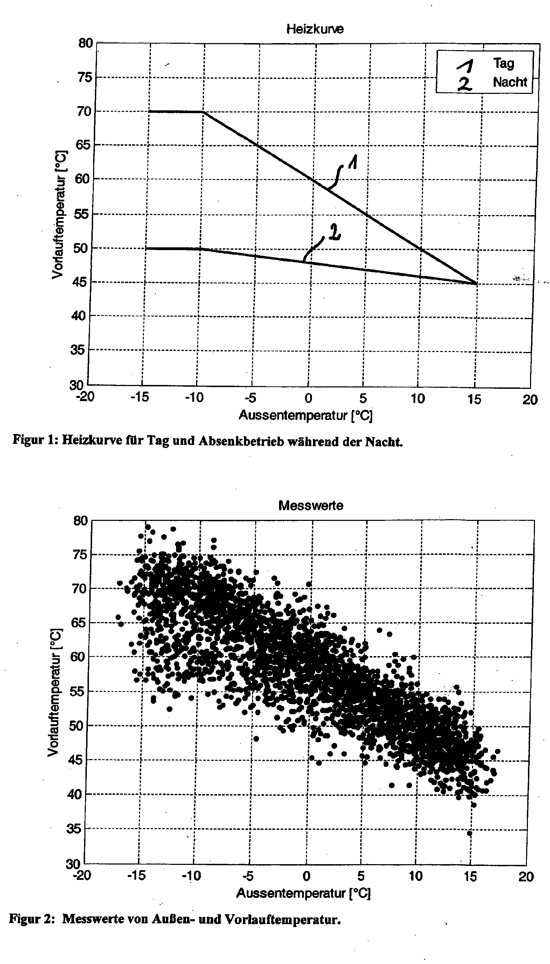

Die Figur 1 zeigt zum Verständnis die Abhängigkeit der Vorlauftemperatur von der Außentemperatur anhand zweier beispielhafter Heizkurven-Kennlinien. Die Kennlinie 1 beschreibt einen Betriebsmodus für den Tag und die Kennlinie 2 einen abgesenkten Betriebsmodus für die Nacht. Im Bereich geringer Temperaturen können die Abhängigkeiten jeweils ein Plateau beschreiben und davon ausgehend im Bereich steigender Außentemperaturen eine monoton fallende Charakteristik. Zwischen diesen Betriebsarten schaltet die Heizungsanlage automatisch um, z.B. kann in der Zeit von 00:00 bis 6:00 morgens eine Nachtabsenkung vorliegen.

Erfindungsgemäß werden über einen Tag verteilt für mehrere Tage sowohl die Vorlauftemperatur als auch die Außentemperatur am Ort der Liegenschaft der Heizungsanlage mehrfach ermittelt, wie es im vorangehenden Teil beschrieben wurde, bei der Vorlauftemperatur z.B. durch konkrete Messung mittels eines Temperatursensors an einem der Heizkreise und hinsichtlich der Außentemperatur z.B. durch Abfrage aus einer Wetterdatenbank.

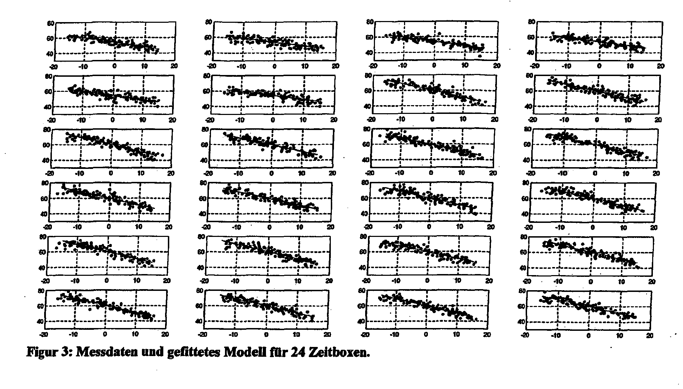

Aus jeweils zwei Werten wird ein Messwertepaar gebildet, das zu einem bestimmten Zeitpunkt des Messtages Gültigkeit hat. Die Vielzahl der Messwertepaare ist in der Figur 2 beispielshaft visualisiert ohne Darstellung der Abhängigkeit vom Zeitpunkt der Gültigkeit, bzw. Erfassung / Ermittlung. Alle Messwertepaare dieser Gesamtmenge von Messwertepaaren werden jeweils individuell einer Zeitbox zugeordnet, wie es Figur 3 visualisiert. Jede Zeitbox umfasst demnach nach Abschluss aller Zuordnungen diejenigen Messwertepaare von allen Messtagen, welche einen Zeitpunkt haben, der innerhalb des zeitlichen Intervalls der Zeitbox liegt. In diesem Beispiel sind 24 durchnummerierte Zeitboxen gebildet von jeweils einer Stunde zeitlicher Intervallbreite. Jede Zeitbox umfasst beispielsweise diejenigen Messwertepaare mit einem Zeitpunkt zwischen zwei vollen Stunden der Uhrzeit bei allen Messtagen.

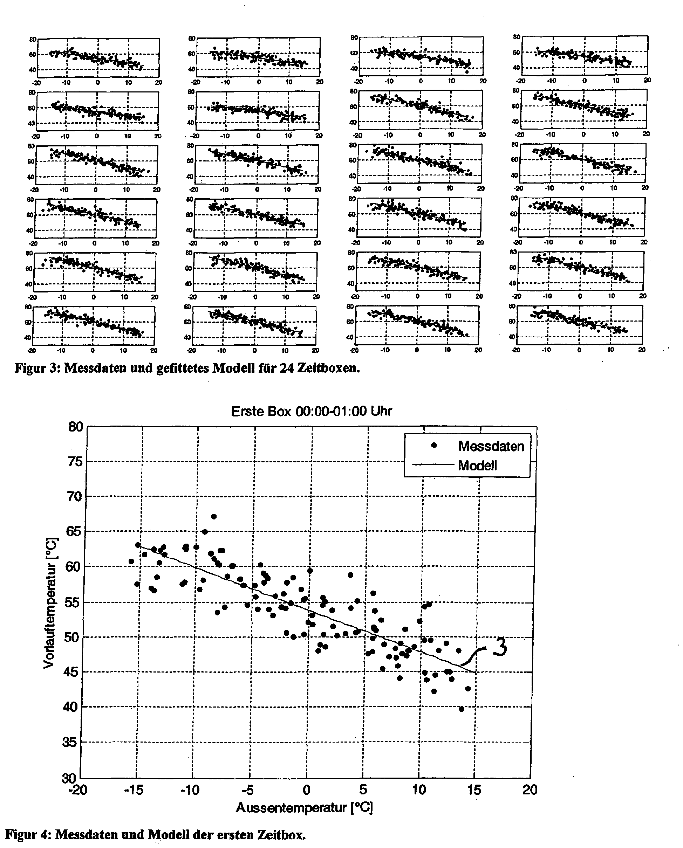

Für jede Zeitbox, hier also insgesamt für 24 Zeitboxen wird auf der Basis der darin zugeordneten Messwertepaare ein mathematisches Modell gebildet, welches die Abhängigkeit der Messwerte in der jeweiligen Zeitbox voneinander beschreibt. Ein solches Modell kann z.B. durch eine lineare Regression gebildet werden. Die erste Zeitbox und das für deren Messwerte gebildete Modell 3 ist in der Figur 4 dargestellt. Das gebildete Modell 3 ist durch die durchgezogenen Linie 3 gegeben. Diese Linie weist eine Steigung auf, die z.B. für das Modell einen typischen Parameter darstellt, anhand dem die Modelle unterschieden werden können.

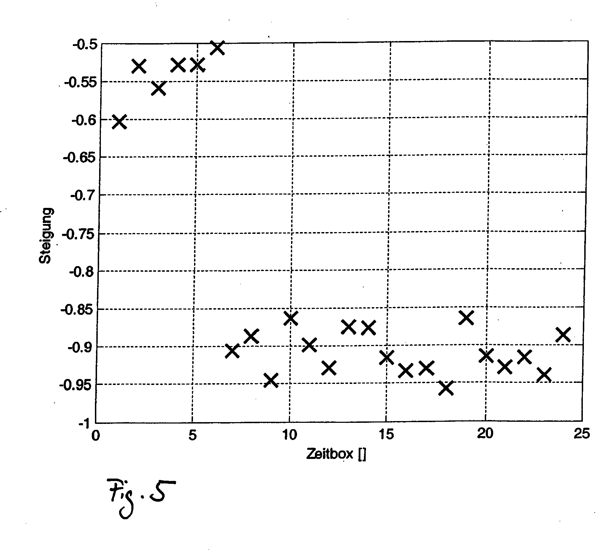

Die Figur 5 zeigt aufgetragen in der X-Achse gegen die Ordnungsnummer der Zeitbox den Steigungsparameter eines jeden Modells. Die Ordnungsnummer entspricht hier der Nummer des ein-Stunden-Intervalls jeder Zeitbox, so dass sich effektiv ein Auftrage der Steigungsparameter gegen die Tagesuhrzeit ergibt.

Erkennbar ist hier, dass die Steigungen in der Zeit von 0:00 Uhr bis 6:00 vom Betrag her kleiner sind als die Steigungen in den übrigen Uhrzeiten, so dass aus dieser Darstellung ersichtlich ist, dass die betrachtete Heizungsanlage eine Nachabsenkung aufweist in dieser Zeit von 0:00 bis 6:00. Die jeweilige Heizkurve von Normalbetrieb und abgesenkten Betrieb ist durch die jeweiligen Steigungen zusätzlich konkretisiert. Anhand dieser Information kann somit eine Heizungsanlage analysiert und ggfs. optimiert werden.

## Patentansprüche

1. Verfahren zur Ermittlung der Schaltzeiten einer Nachtabsenkung / Nachtabschaltung und/oder der Heizkurven-Kennliriie einer Heizungsanlage, **dadurch gekennzeichnet, dass**
a. für mehrere Zeitpunkte eines jeden von mehreren Meßtagen Wertepaare gebildet werden von zu dem Zeitpunkt vorliegender Vorlauftemperatur wenigstens eines Heizkreises der Heizungsanlage und Außentemperatur am Ort der Liegenschaft der Heizungsanlage und
b. das zeitliche Intervall eines Tages von 24 Stunden in mehrere, aufeinander folgende Zeitboxen unterteilt wird und jedes Wertepaar derjenigen Zeitbox zugeordnet wird, in welcher der Zeitpunkt des Wertepaares liegt und
c. für jede der Zeitboxen zu den darin zugeordneten Meßwertpaaren ein mathematisches Model gebildet wird, welches die Abhängigkeit von Vorlauftemperatur zur Außentemperatur in dieser Zeitbox beschreibt.

2. Verfahren nach Anspruch 1, **dadurch gekennzeichnet, dass** das zeitliche Intervall eines Tages in gleichlange Zeitboxen unterteilt wird.

3. Verfahren nach Anspruch 1, **dadurch gekennzeichnet, dass** die Zeitboxen mit einer Ordnungszahl durchnummeriert werden.

4. Verfahren nach Anspruch 1 oder 2, **dadurch gekennzeichnet, dass** das zeitliche Intervall eines Tages in 24 Zeitboxen zu jeweils einer Stunde Intervalllänge unterteilt wird.

5. Verfahren nach einem der vorherigen Ansprüche, **dadurch gekennzeichnet, dass** für jede Zeitbox ein Modell, insbesondere ein lineares Modell parametriert wird und in Abhängigkeit wenigstens eines Parameters des Modells, insbesondere eines die Steigung des Modells beschreibenden Parameters auf das Vorliegen einer Schaltzeit in oder vor einer Zeitbox geschlossen wird.

6. Verfahren nach Anspruch 5, **dadurch gekennzeichnet, dass** wenigstens ein Parameter des Modells in Abhängigkeit von der Zeitbox, insbesondere einer Ordnungszahl der Zeitbox grafisch visualisiert wird.

7. Verfahren nach einem der vorherigen Ansprüche, **dadurch gekennzeichnet, dass** für jeden Meßtag mehrfach periodisch wiederholend im Abstand einer ersten Zeitdauer die Vorlauftemperatur an wenigstens einem Heizkreis der Heizungsanlage gemessen und zusammen mit einer Zeitinformation der Messung gespeichert wird.

8. Verfahren nach einem der vorherigen Ansprüche, **dadurch gekennzeichnet, dass** für jeden Meßtag mehrfach periodisch wiederholend im Abstand einer zweiten Zeitdauer die Außentemperatur am Ort der Liegenschaft der Heizungsanlage erfasst und zusammen mit einer Zeitinformation gespeichert wird.

9. Verfahren nach einem der vorherigen Ansprüche 7 oder 8, **dadurch gekennzeichnet, dass** die erste und zweite Zeitdauer kleiner gewählt werden als die zeitliche Dauer der Zeitboxen, in die jeder Meßtag eingeteilt wird.

10. Verfahren nach einem der vorherigen Ansprüche, **dadurch gekennzeichnet, dass** bei unterschiedlichen ersten und zweiten Zeitdauern der Erfassung von der Vorlauftemperatur und der Außentemperatur mehrere Werte von denjenigen Werten, die mit der geringeren zeitlichen Dauer erfasst werden umgerechnet werden auf jeweils einen Wert mit einem neuen Zeitpunkt und die Abstände der Zeitpunkte der umgerechneten Werte denjenigen Abständen entspricht, mit denen die Werte mit der längeren Zeitdauer erfasst werden.

11. Verfahren nach einem der vorherigen Ansprüche, **dadurch gekennzeichnet, dass** diejenigen Werte von Vorlauftemperatur und Außentemperatur zu einem Wertepaar zusammengefasst werden, deren jeweilige Zeitpunkte gleich sind oder sich nur bis auf einen festgelegten Toleranzwert unterscheiden.

12. Verfahren nach einem der vorherigen Ansprüche, **dadurch gekennzeichnet, dass** die Erfassung der Vorlauftemperatur mittels eines Temperatursensors an wenigstens einem Heizkreis der Heizungsanlage erfolgt und die Vorlauftemperaturmesswerte mittels eines Datenloggers, insbesondere am Ort der Heizungsanlage in Verbindung mit einer Zeitinformation der jeweiligen Erfassung gespeichert werden.

13. Verfahren nach einem der vorherigen Ansprüche, **dadurch gekennzeichnet, dass** die Messwerte und Zeitinformationen von Vorlauftemperatur und/oder Außentemperatur mittels wenigstens eines Telekommunikationsnetzwerkes übermittelt werden an eine zentrale Auswerteeinheit, insbesondere mit welcher die Zuordnung der Meßwerte zu Meßwertpaaren und die Zuordnung von Meßwertpaaren zu den Zeitboxen und die Parametrierung eines Modells für die Meßwertpaare jeder Zeitbox erfolgt.

14. Verfahren nach einem der vorherigen Ansprüche, **dadurch gekennzeichnet, dass** die Erfassung der Außentemperatur erfolgt mittels
a. eines Temperatursensors am Ort der Liegenschaft der Heizungsanlage und die Außentemperaturwerte mittels eines Datenloggers, insbesondere am Ort der Heizungsanlage in Verbindung mit einer Zeitinformation der jeweiligen Erfassung gespeichert werden oder
b. eines Temperatursensors einer Wetterstation, insbesondere einer über ein Telekommunikationsnetzwerk öffentlich zugänglichen Wetterstation am Ort oder in der Nähe des Ortes der Liegenschaft der Heizungsanlage und die Außentemperaturwerte in Verbindung mit einer Zeitinformation der jeweiligen Erfassung gespeichert werden, insbesondere in einer zentralen Auswerteeinheit oder
c. Berechnung eine lokaler Außentemperatur mittels eines mathematischen Wettermodels in Abhängigkeit des Ortes der Liegenschaft der Heizungsanlage und die Außentemperturwerte in Verbindung mit einer Zeitinformation der jeweiligen Berechnung gespeichert werden, insbesondere in einer zentralen Auswerteeinheit oder
d. Auslesen eines zum Ort der Liegenschaft der Heizungsanlage gehörenden Außentemperaturwertes in Verbindung mit einer Zeitinformation aus einer meteorologischen Datenbank, insbesondere mittels eines Telekommunikationsnetzwerkes.

## Claims

1. Method for determining the switching times of a night-time reduction/night-time shut-off and/or the heating characteristic curve of a heating system, **characterized in that**
a. for a plurality of times of each of a plurality of measurement days, pairs of values of the flow temperature of at least one heating circuit of the heating system, which is present at the time, and of the outside temperature at the location of the property of the heating system are formed, and
b. the temporal interval of one day of 24 hours is subdivided into a plurality of successive time boxes and each pair of values is assigned to that time box in which the time of the pair of values is located, and
c. a mathematical model is formed for each of the time boxes for the assigned pairs of measured values therein, which mathematical model describes the dependence of the flow temperature on the outside temperature in this time box.

2. Method according to Claim 1, **characterized in that** the temporal interval of one day is subdivided into time boxes of equal length.

3. Method according to Claim 1, **characterized in that** the time boxes are numbered consecutively with an ordinal number.

4. Method according to Claim 1 or 2, **characterized in that** the temporal interval of one day is subdivided into 24 time boxes of an interval length of one hour each.

5. Method according to one of the preceding claims, **characterized in that** a model, in particular a linear model, is parameterized for each time box and the presence of a switching time in or before a time box is inferred on the basis of at least one parameter of the model, in particular a parameter describing the gradient of the model.

6. Method according to Claim 5, **characterized in that** at least one parameter of the model is graphically visualized on the basis of the time box, in particular an ordinal number of the time box.

7. Method according to one of the preceding claims, **characterized in that** the flow temperature in at least one heating circuit of the heating system is measured several times for each measurement day in a periodically repetitive manner at the interval of a first period and is stored together with an item of time information relating to the measurement.

8. Method according to one of the preceding claims, **characterized in that** the outside temperature at the location of the property of the heating system is captured several times for each measurement day in a periodically repetitive manner at the interval of a second period and is stored together with an item of time information.

9. Method according to either of the preceding Claims 7 and 8, **characterized in that** the first and second periods are selected to be shorter than the temporal duration of the time boxes into which each measurement day is divided.

10. Method according to one of the preceding claims, **characterized in that,** in the case of different first and second periods for which the flow temperature and the outside temperature are captured, a plurality of values of those values which are captured with the shorter temporal duration are converted in each case to a value with a new time, and the intervals of the times of the converted values correspond to those intervals at which the values are captured with the longer period.

11. Method according to one of the preceding claims, **characterized in that** those values of the flow temperature and outside temperature whose respective times are the same or differ only up to a stipulated tolerance value are combined to form a pair of values.

12. Method according to one of the preceding claims, **characterized in that** the flow temperature is captured by means of a temperature sensor in at least one heating circuit of the heating system and the flow temperature measured values are stored by means of a data logger, in particular at the location of the heating system, in conjunction with an item of time information relating to the respective capture.

13. Method according to one of the preceding claims, **characterized in that** the measured values and time information relating to the flow temperature and/or the outside temperature are transmitted by means of at least one telecommunication network to a central evaluation unit, in particular which is used to assign the measured values to pairs of measured values and to assign pairs of measured values to the time boxes and to parameterize a model for the pairs of measured values of each time box.

14. Method according to one of the preceding claims, **characterized in that** the outside temperature is captured
a. by means of a temperature sensor at the location of the property of the heating system, and the outside temperature values are stored by means of a data logger, in particular at the location of the heating system, in conjunction with an item of time information relating to the respective capture, or
b. by means of a temperature sensor in a weather station, in particular a weather station which is publicly accessible via a telecommunication network at the location or in the vicinity of the location of the property of the heating system, and the outside temperature values are stored in conjunction with an item of time information relating to the respective capture, in particular in a central evaluation unit, or
c. by calculating a local outside temperature by means of a mathematical weather model on the basis of the location of the property of the heating system, and the outside temperature values are stored in conjunction with an item of time information relating to the respective calculation, in particular in a central evaluation unit, or
d. by reading an outside temperature value belonging to the location of the property of the heating system, in conjunction with an item of time information, from a meteorological database, in particular by means of a telecommunication network.

## Revendications

1. Procédé de détermination des temps de commutation d'une réduction nocturne/d'un arrêt nocturne et/ou de la courbe caractéristique de chauffage d'une installation de chauffage,
**caractérisé en ce que**
a. pour plusieurs instants de chacun de plusieurs jours de mesure, des paires de valeurs sont formées à partir de la température de départ d'au moins un circuit de chauffage de l'installation de chauffage et de la température extérieure à l'emplacement de la propriété de l'installation de chauffage, observées à cet instant, et
b. l'intervalle de temps d'un jour de 24 heures est divisé en plusieurs tranches de temps consécutives et chaque paire de valeurs est attribuée à la tranche de temps dans laquelle se situe l'instant de la paire de valeurs, et
c. pour chacune des tranches de temps, un modèle mathématique est établi pour les paires de valeurs de mesure qui y sont affectées, lequel modèle décrit la dépendance de la température de départ par rapport à la température extérieure dans ladite tranche de temps.

2. Procédé selon la revendication 1, **caractérisé en ce que** l'intervalle de temps d'un jour est divisé en tranches de temps de même longueur.

3. Procédé selon la revendication 1, **caractérisé en ce que** les tranches de temps sont numérotées avec un nombre ordinal.

4. Procédé selon la revendication 1 ou 2, **caractérisé en ce que** l'intervalle de temps d'un jour est divisé en 24 tranches de temps, dont chacune a une longueur d'intervalle d'une heure.

5. Procédé selon l'une des revendications précédentes, **caractérisé en ce que**, pour chaque tranche de temps, un modèle, en particulier un modèle linéaire, est paramétré et, en fonction d'au moins un paramètre du modèle, en particulier d'un paramètre décrivant la pente du modèle, l'existence d'un temps de commutation dans ou avant une tranche de temps est déduite.

6. Procédé selon la revendication 5, **caractérisé en ce qu'**au moins un paramètre du modèle est visualisé graphiquement en fonction de la tranche de temps, en particulier d'un nombre ordinal de la tranche de temps.

7. Procédé selon l'une des revendications précédentes, **caractérisé en ce que**, pour chaque jour de mesure, la température de départ est mesurée sur au moins un circuit de chauffage de l'installation de chauffage et est stockée avec une information temporelle de la mesure.

8. Procédé selon l'une des revendications précédentes, **caractérisé en ce que**, pour chaque jour de mesure, la température extérieure à l'emplacement de la propriété de l'installation de chauffage est mesurée de manière répétée plusieurs fois périodiquement avec un intervalle égal à une deuxième durée et est stockée conjointement avec une information temporelle.

9. Procédé selon l'une des revendications 7 ou 8 précédentes, **caractérisé en ce que** les première et deuxième durées sont choisies pour être plus petites que la durée des tranches de temps en lesquelles est divisé chaque jour de mesure.

10. Procédé selon l'une des revendications précédentes, **caractérisé en ce que**, dans le cas où les première et deuxièmes durée de la détection de la température de départ et de la température extérieure sont différentes, plusieurs valeurs, parmi celles qui sont détectées avec la durée la plus courte, sont converties en une valeur correspondant à un nouvel instant et les intervalles entre les instants des valeurs converties correspondent aux intervalles avec lesquels les valeurs ayant la durée la plus longue sont détectées.

11. Procédé selon l'une des revendications précédentes, **caractérisé en ce que** les valeurs de la température de départ et de la température extérieure sont combinées en une paire de valeurs dont les instants respectifs sont identiques ou ne diffèrent au plus que d'une valeur de tolérance définie.

12. Procédé selon l'une des revendications précédentes, **caractérisé en ce que** la température de départ est détectée au moyen d'un capteur de température sur au moins un circuit de chauffage de l'installation de chauffage et les valeurs de mesure de la température de départ sont stockées au moyen d'un enregistreur de données, en particulier à l'emplacement de l'installation de chauffage, en liaison avec une information temporelle de la détection respective,

13. Procédé selon l'une des revendications précédentes, **caractérisé en ce que** les valeurs de mesure et les informations temporelles de la température de départ et/ou de la température extérieure sont transmises à une unité d'évaluation centrale au moyen d'au moins un réseau de télécommunication, en particulier à l'aide duquel s'effectue l'affectation des valeurs de mesure à des paires de valeurs de mesure et l'affectation de paires de valeurs de mesure aux tranches de temps et le paramétrage d'un modèle pour les paires de valeurs de mesure de chaque tranche de temps.

14. Procédé selon l'une des revendications précédentes, **caractérisé en ce que** la détection de la température extérieure est effectuée au moyen
a. d'un capteur de température à l'emplacement de la propriété de l'installation de chauffage, les valeurs de température extérieure étant stockées au moyen d'un enregistreur de données, en particulier à l'emplacement de l'installation de chauffage en liaison avec une information temporelle de la détection respective ou
b. d'un capteur de température d'une station météorologique, en particulier d'une station météorologique accessible au public par le biais d'un réseau de télécommunication à l'emplacement ou à proximité de l'emplacement de la propriété de l'installation de chauffage, les valeurs de température extérieure étant stockées en liaison avec une information temporelle de la détection respective, en particulier dans une unité d'évaluation centrale ou
c. du calcul d'une température extérieure locale au moyen d'un modèle mathématique de météorologie en fonction de l'emplacement de la propriété de l'installation de chauffage, les valeurs de température extérieure étant stockées en liaison avec une information temporelle du calcul respectif, en particulier dans une unité d'évaluation centrale ou
d. de la lecture d'une valeur de température extérieure correspondant à l'emplacement de la propriété de l'installation de chauffage en liaison avec une information temporelle provenant d'une base de données météorologiques, en particulier au moyen d'un réseau de télécommunication.
